# EUROPEAN PATENT SPECIFICATION

(11) **EP 0 720 909 B1**
(45) Date of publication and mention of the grant of the patent: **20.03.2002**
(21) Application number: 96200510.4
(22) Date of filing: 29.09.1993
(51) Int. Cl.: B29D 23/00

(54) **Method and device for manufacturing a bent rubber pipe**
Verfahren und Vorrichtung zur Fertigung eines gebogenen Gummirohres
Procédé et dispositif pour fabriquer un tuyau coudé en caoutchouc

(30) Priority: 29.09.1992 JP 28371192; 29.09.1992 JP 28371292; 29.09.1992 JP 28371392; 29.09.1992 JP 28371492
(43) Date of publication of application: 10.07.1996
(62) Divisional of application: 93307725.7
(73) Proprietor: YAMASHITA RUBBER KABUSHIKI KAISHA, Iruma-Gun, Saitama (JP)
(72) Inventor: Matsuda, Shinya, Ohi-Machi, Iruma-Gun, Saitama (JP); Chida, Kohji, Ohi-Machi, Iruma-Gun, Saitama (JP); Toyoda, Shigeki, Ohi-Machi, Iruma-Gun, Saitama (JP); Awaji, Hiroyuki, Ohi-Machi, Iruma-Gun, Saitama (JP); Hasegawa, Tetsuo, Ohi-Machi, Iruma-Gun, Saitama (JP); Shimizu, Kenji, Ohi-Machi, Iruma-Gun, Saitama (JP); Sugie, Seishiroh, Ohi-Machi, Iruma-Gun, Saitama (JP)
(74) Representative: Piésold, Alexander J.

(56) References cited:
- DE-A- 2 140 956
- GB-A- 1 048 788
- GB-A- 1 105 398
- US-A- 2 366 853

## Description

The present invention relates to a device for use in manufacturing a bent rubber pipe.

In order to manufacture a bent rubber pipe, for example, bent three-dimensionally, it is known to perform a fitting step for placing a straight pipe-like moulding material (hereinafter referred to as a semi-finished rubber product) of an unvulcanised or semi-vulcanised rubber on a curved mandrel, a vulcanizing step for forming a rubber pipe fixed in a curved shape by heating and vulcanizing the semi-finished rubber product in a condition fitted on the mandrel, and an extracting step for removing the vulcanized rubber pipe from the mandrel. A process of this type is shown in DE 2140956 (Phoenix Gummiwerke AG).

The extracting step is normally effected by a manual operation which must be carried out immediately after vulcanization in order to handle the pipe at a condition of high temperature, so as to lessen the extracting load when the bent rubber pipe is removed from the mandrel. For this reason, the operation must be performed in a very difficult operating environment having high temperature and high humidity. Thus, it is necessary to take relatively frequent rest periods and also it is difficult to increase operating efficiency.

An alternative method of removing the pipe is disclosed in GB 1048788 (Goodyear). Here, one end of a hose formed on a flexible mandrel is gripped by a clamp. A nozzle attached to the clamp then forces pressurized water into the hose to remove the mandrel.

It is therefore desirable to provide a device for use in manufacturing a bent rubber pipe being capable of improving the operating efficiency of the extracting step, adapting to bulk production, and attaining automation.

In claim 1, there is provided a device for manufacturing a bent rubber pipe, characterized in that a gripping member is provided to freely advance and retract on an extension of an axis of the bent rubber pipe in order to grip one end portion thereof fitted on a mandrel, in that the gripping member is provided with a plurality of moveable pawls for gripping the bent rubber pipe at equidistant positions about said periphery, each pawl being biassed radially inwardly with respect to the pipe by a spring, in that each pawl is formed with a sawtooth-like tooth portion which is capable of contacting with the bent rubber pipe and the teeth of which are inclined to an extracting direction, in that a diameter of a face circle formed by joining the circumferentially adjacent tooth portions of the pawls is smaller than an outer diameter of the bent rubber pipe, and in that the gripping member is arranged to receive the bent rubber pipe and to perform a biting action in which the tooth portions bite into the periphery of the bent rubber pipe in a condition gripping the latter, the tooth portions of the pawls being forced radially outwardly against the force of the spring by the bent rubber pipe as the gripping member advances to its gripping position, the pawls then being urged by the springs into a gripping position in which the end of the bent rubber is gripped by the pawls.

In claim 2, the device for manufacturing a bent rubber pipe set forth in claim 1 is characterized in that each pawl is rotatably supported by a supporting shaft extending in a direction transverse to the axis of the mandrel, and wherein in order to receive the bent rubber pipe in the gripping member, the face circle is expandable at least as much as the outer diameter of the bent rubber pipe, by rotation of each pawl in a retraction direction so that the tooth portion thereof can pass over the periphery of the bent rubber pipe.

In claim 3, the device for manufacturing a bent rubber pipe set forth in claim 2 is characterized in that each pawl is rotatable by means of a spring in a biting direction of the tooth portion.

In claim 4, the device for manufacturing a bent rubber pipe set forth in any of claims 1 to 3 is characterized in that an aligning guide is arranged at the mandrel side of the gripping member, and wherein the aligning guide is provided with a guide bore which is concentric with the face circle and which is capable of receiving the bent rubber pipe therethrough, and a guide surface inclined to the extracting direction toward the guide bore.

According to the invention of claim 1, since the gripping member is provided with a plurality of pawls which are equidistant in the peripheral direction of the bent rubber pipe, the periphery of the end of the bent rubber pipe can be gripped with the uniform force and it can be extracted without being flattened.

Also, since the pawl is formed with sawtooth-like tooth portion inclining in the extracting direction, the face circle is smaller than an outer diameter of the bent rubber pipe, but when the end of the bent rubber pipe is gripped, it is possible to perform a gripping action which runs on the periphery of the bent rubber pipe, and moreover, when extracting, the bent rubber pipe can be exactly extracted by the biting action.

Furthermore, since the extracting operation can be effected by machines without using hands, the operator is released from the severe operating environment, and since the relatively frequent rest times are unnecessary, it is possible to shorten the shaping cycle and to improve the operating efficiency, as well as it is possible to attain the performance of bulk production and the automation.

According to the features of claim 2, since the pawl is rotatable by the supporting shaft extending in a direction intersectional to the axis of the bent rubber pipe, when the end portion of the bent rubber pipe is gripped the pawl rotates in the escaping direction and can run easily on the end portion of the bent rubber pipe, whereby it can attain the smooth gripping action.

According to the features of claim 3, since the pawl is excited by means of a spring in a biting direction, the biting action is possible further exactly by utilizing the energizing force of the spring.

According to the features of claim 4, when the gripping member is displaced in the direction of the bent rubber pipe, since the guide surface of the aligning guide contacts firstly with the leading end of the bent rubber pipe and the leading end is guided by the guide surface while the guide bore coincides with the leading end of the bent rubber pipe, it is possible to allow the gripping member to run smoothly on the periphery of the bent rubber pipe upon the gripping action, and since it is possible to align the gripping member with the mandrel even if they are not exactly in the same axis, the centring operation of the gripping member can be facilitated.

Certain preferred embodiments of the invention will now be described by way of example and with reference to the accompanying drawings, in which:-
Figure 1 is a flow view showing the principle of operation of the embodiments of the present invention;
Figure 2 is a cross sectional view showing an extracting device for extracting a rubber pipe from a mandrel;
Figure 3 is an enlarged cross sectional view taken along line X-X in Figure 2;
Figure 4 is a view showing actuation of certain parts during the extracting step (the condition immediately before gripping);
Figure 5 is a view showing actuation of certain parts during the extracting step (the condition of rotation in an escaping direction);
Figure 6 is a view showing actuation of certain parts during the extracting step (the condition of rotation in a biting direction); and
Figure 7 is a cross sectional view showing certain parts of an extracting step of a further embodiment.

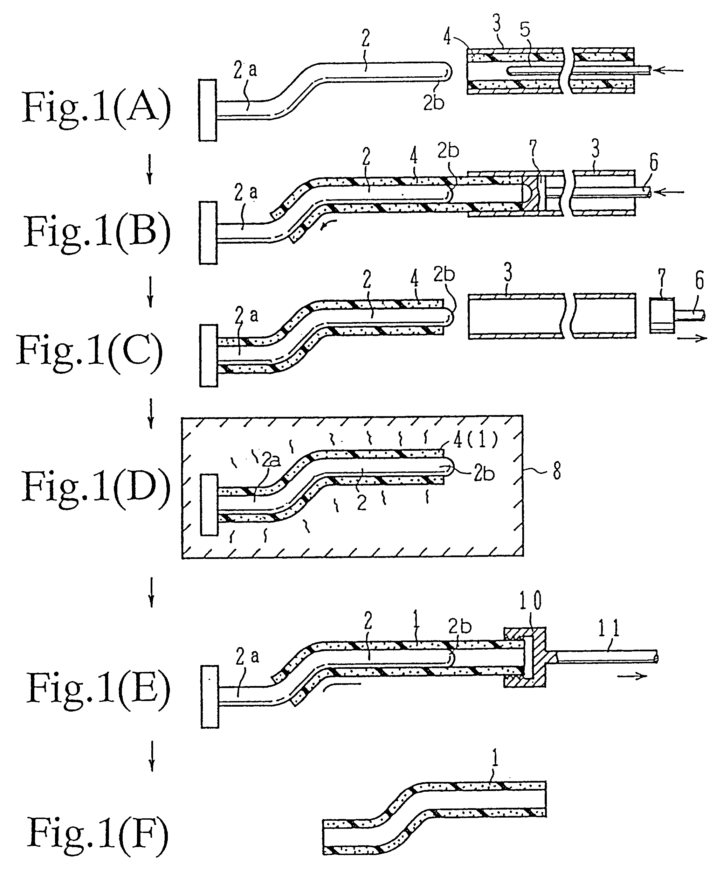

Figure 1 is a view showing the principles of operation during a fitting step, a vulcanizing step and an extracting step in a method of manufacturing a bent rubber pipe in sequential manner.

The stages A, B, C show a fitting step, stage D a vulcanizing step, and stages E, F an extracting step. Further, the outline shown in the F stage is a cross sectional form of a bent rubber pipe 1 being a finished article. This bent rubber pipe is bent three-dimensionally.

First of all, in the fitting step stage A shows a condition in which mandrel 2, a guide member 3 and a semi-finished rubber product 4 are arranged on the same axis.

The mandrel 2 is cantilevered on a mandrel base, and is bent in the same shape as that desired for the bent rubber pipe 1 (F stage). The mandrel 2 is provided with a base portion 2a and a free end 2b, and the straight pipe-like guide member 3 is arranged adjacent to an axis of the mandrel and the free end 2b on the same axis.

Into a hollow portion of the guide member 3 is inserted the semi-finished rubber product 4 having a substantially straight pipe shape, which is supported to freely displace in the lengthwise direction of the guide member 3.

Used as a rubber semi-finished product 4 are EPT, NBR, NBR and PVC copolymer, SBR, CR, NR and any other suitable rubber materials or blends of those suitably combined, or blends of a suitable material among them and another material, if necessary, a material including short fibres kneaded into rubber, a material including reinforced yarn or woven textile, a material having a surface knitted with reinforced yarn, or the like.

Further, at the A stage, a nozzle 5 is inserted inside the semi-finished rubber product 4 before fitting the latter, and is adapted to advance and retract in an axial direction of the semi-finished rubber product whilst discharging die lubricant, whereby the die lubricant is applied to the inner surface of the semi-finished rubber product 4.

At the B stage, an arm 6 constituting part of a pushing device is pushed into the guide member 3 from an end opposite to the mandrel 2, and a head 7 which has a size generally equal to the inner diameter of the guide member 3, mounted on a leading end of the arm 6 is abutted to one end of the semi-finished rubber product 4, whereby the latter is pushed out of the end of the mandrel 2.

Then, the semi-finished rubber product 4, is pushed on to the mandrel 2 so as to cover it, easily bending in order to do so. It does not however tend to buckle in front of the mandrel 2 because the semi-finished rubber product is guided at its periphery by the straight pipe-like guide member 3 together with the mandrel 2 on the same axis. The product 4 is then pushed out laterally as it approaches the base portion 2a by the bent part of the mandrel 2.

The C stage is a condition in which the fitting of the semi-finished rubber product has been completed, and the semi-finished rubber product 4 is fitted on the periphery of the mandrel and is curved in the same shape as the mandrel. Simultaneously, the arm 6 and head 7 are retracted from the inside of the guide member 3 to outside thereof.

The D stage is the vulcanizing step, and the semi-finished rubber product is moved into a vulcanizing device 8 in its condition fitted on the mandrel 2, and is vulcanized by heating at a required temperature, pressure and time thereby to form the bent rubber pipe 1 fixed with the same shape as the mandrel 2.

In the E stage, one end of the bent rubber pipe 1 taken out from the vulcanizing device 8 after vulcanizing is gripped by means of a gripping member 10, and thereafter, an arm 11 of a plunger mounting the gripping member 10 on a leading end thereof is retracted along the axis of the mandrel 2, whereby the bent rubber pipe 1 is extracted from the mandrel 2.

At this time, the bent rubber pipe 1 is extracted in the axial direction of the mandrel 2 whilst deforming according to curves of the latter. However, because the bent rubber pipe is at a relatively high temperature immediately after vulcanizing, this tends to reduce the extraction load and smooth operation can be attained.

The F stage shows the bent rubber pipe 1 thus extracted and removed from the mandrel 2 and the bent rubber pipe 1 is restored to the required bent shape corresponding to the mandrel 2.

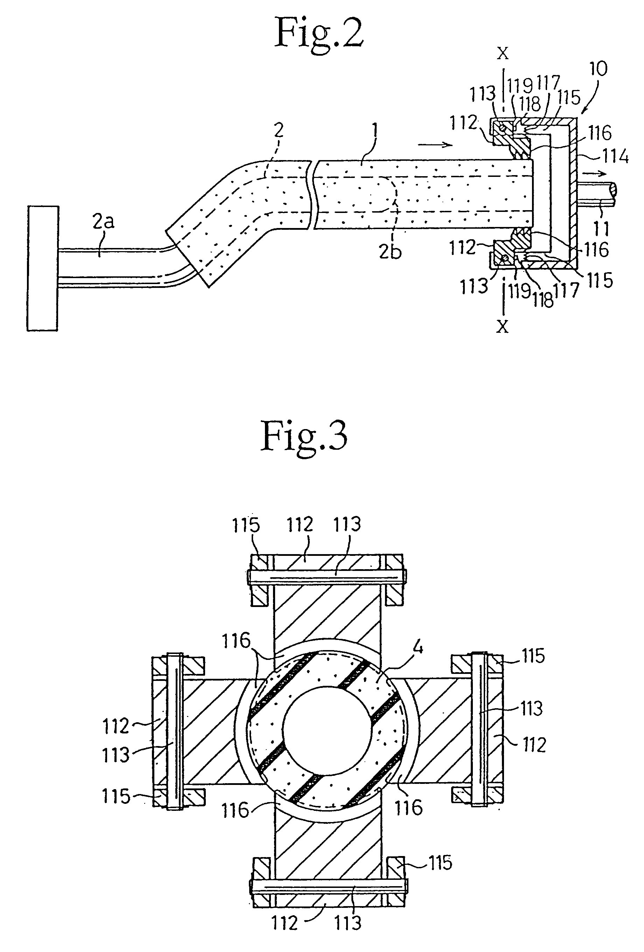

Figure 2 is a view showing a device for the extracting step, and shows stage E of Figure 1 being the extracting step in a condition enlarged and more detailed. Figure 3 is a cross sectional view taken along line X-X in Figure 2.

On the gripping member 10 a plurality of pawls 112 are rotatably mounted by respective supporting pins 113 each extending in a direction transverse to the axis of the mandrel 2. Each supporting pin 113 is mounted on a leading end of an arm 115 which is bent from a bracket 114 provided on a leading end of the arm 11. On the pawls are formed saw tooth-like tooth portions 116 which are rotated and energized in a direction biting in the outer periphery of the bent rubber pipe 1 by means of a compression spring 117 tensed between the pawl 112 and the arm portion 115. Further, a stopper 118 which limits the rotating amount of the pawl 112 is provided on the arm 115 in a position abutting a shoulder portion of the pawl 112.

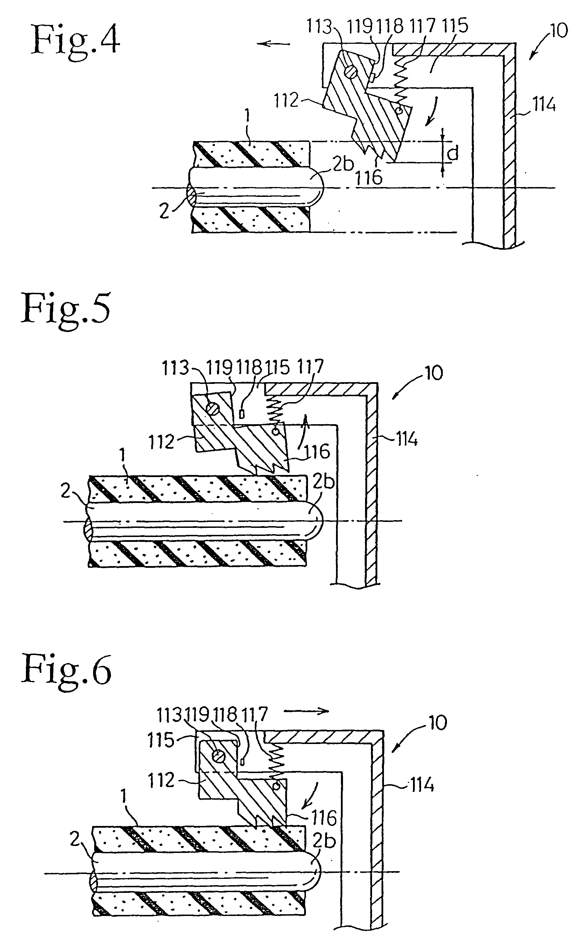

As apparent from Figure 3, the pawls 112 are provided at positions dividing the periphery of the bent rubber pipe 1 into substantially four equal length portions and a face circle formed by joining the leading ends of each tooth portion 116 is adapted to be smaller than the outer periphery of the bent rubber pipe 1 (see Figure 4). Accordingly, the tooth portions 116 of the pawls 112 are able to grip the periphery of the bent rubber pipe 1 with substantially unified force. Four pawls 112 need not necessarily be provided and in general it is possible to provide three or more pawls.

The following description is made about operation of the embodiment shown in Figures 4 to 6. Further, Figures 4 to 6 are enlarged views showing different operating conditions of the parts of the gripping member 10.

Figure 4 shows a condition before gripping the bent rubber pipe 1 after starting the extracting step, the pawl 112 being energized by means of the spring 117 to rotate in a clock wise direction around the supporting pin 113, as well as the shoulder 119 abutting the stopper 118 to stop the tooth portion 116 at a position at which it extends by a dimension "d" into the end projection of the outer periphery of the bent rubber pipe 1. In this condition, when the gripping member 10 is displaced in the direction of the free end 2b of the mandrel 2, the gripping action is performed. In the gripping action, the tooth portion 116 firstly contacts the leading end of the bent rubber pipe 1. Then, as shown in Figure 5, the pawl 112 is pushed by the bent rubber pipe 1 and causes the spring 117 to compress against the action of the latter, whereby the pawl rotates to retract in a counter clockwise direction. The pawl 112 runs along the outer periphery of the bent rubber pipe 1 with frictional contact by the tooth portion 116. At this time, since the latter is inclined in the extracting direction, the rotation of the pawl 112 in the retraction direction can occur.

When the gripping member 10 stops the displacement thereof, the pawl 112 rotates in the opposite direction to the retraction direction, that is, in a biting direction being the clockwise direction in Figure 6 under the restoring resiliency of the spring 117, whereby the tooth portions 116 bite into the outer periphery of the bent rubber pipe 1 and the substantially unified force grips the periphery. Then, as shown in Figure 6, when the gripping member 10 is displaced in the extracting direction, the tooth portions 116 bite into the periphery of the bent rubber pipe 1, and the latter moves in the extracting direction integrally with the gripping member 10, and is extracted from the mandrel 2. At this time, the end of the bent rubber pipe 1 is gripped at the periphery thereof with the unified force and it can be extracted without deforming or tending to be flattened. Further, since the tooth portion 116 has a saw tooth shape inclined in the extracting direction, the extracting action tends to increase the biting into the periphery of the bent rubber pipe 1, so that it is possible to extract positively.

Though the extracting step is performed at a high temperature condition immediately after vulcanizing the bent rubber pipe 1 in order to lessen the extracting load, because the operation is performed by a machine, it is unnecessary for an operator to work under severe conditions of high temperature and high humidity, as in the case of a manual extraction operation.

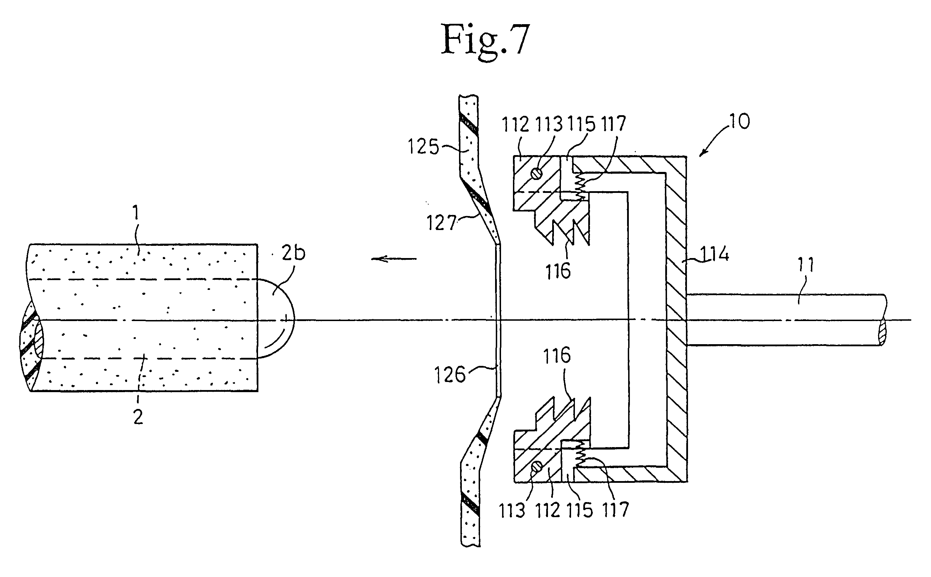

Figure 7 is an enlarged view showing the gripping member 10 according to a further embodiment relating to the extracting step. In this further embodiment, the gripping member 10 is identical to the embodiment described with reference to Figures 2 to 6, and an aligning guide 125 is provided between the free end 2b of the mandrel 2 and the gripping member 10. The aligning guide 125 is a disc-like member concentric with them, and has a central guide opening 126 with an inner diameter substantially identical to the outer diameter of the bent rubber pipe 1. The aligning guide is united with the gripping member 10 by mounting on the side of the bracket 114 so as to become concentric with the face circle of the tooth portion 116 of the pawl 112. Also, on the aligning guide 125 is formed a guide slant surface 127 which is directed in a centre direction at a periphery of the guide opening 126 and which inclines in the extracting direction.

In order to grip the bent rubber pipe 1, when the gripping member 10 is moved to the free end 2b, the guide slant surface 127 of the aligning guide 125 contacts the leading end (adjacent the free end 2b side) of the bent rubber pipe 1, and moves in a direction transverse to the axis whilst sliding along the leading end of the bent rubber pipe 1 so as to allow the leading end of the latter to coincide with the guide opening 126, so that the aligning guide 125 aligns the gripping member with the pipe 1.

Therefore, even if disorder exists somewhat between the axes of the mandrel 2 and the gripping member 10, since, under the aligning action of the aligning guide 125, the pawl 112 of the gripping member 10 runs smoothly on the bent rubber pipe 1 and is able to grip it, it is possible to reduce the initial centring precision when arranging concentrically the mandrel 2 and the gripping member 10, and the centring operation becomes easy.

Other aspects of a method for manufacturing a bent rubber pipe, and devices for use in manufacturing a bent rubber pipe, are disclosed in EP 0595475, from which this application was divided.

## Claims

1. A device for use in manufacturing a bent rubber pipe (1), **characterized in that** a gripping member (10) is provided to freely advance and retract on an extension of an axis of the bent rubber pipe (1) in order to grip one end portion thereof fitted on a mandrel (2), **in that** the gripping member (10) is provided with a plurality of moveable pawls (112) for gripping the bent rubber pipe at equidistant positions about said periphery, each pawl being biassed radially inwardly with respect to the pipe by a spring (117), **in that** each pawl is formed with a sawtooth-like tooth portion (116) which is capable of contacting with the bent rubber pipe (1) and the teeth of which are inclined to an extracting direction, **in that** a diameter of a face circle formed by joining the circumferentially adjacent tooth portions of the pawls is smaller than an outer diameter of the bent rubber pipe, and **in that** the gripping member (10) is arranged to receive the bent rubber pipe (1) and to perform a biting action in which the tooth portions (116) bite into the periphery of the bent rubber pipe (1) in a condition gripping the latter, the tooth portions (116) of the pawls (112) being forced radially outwardly against the force of the spring (117) by the bent rubber pipe (1) as the gripping member (10) advances to its gripping position, the pawls (112) then being urged by the springs (117) into a gripping position in which the end of the bent rubber pipe (1) is gripped by the pawls (112).

2. A device for use in manufacturing a bent rubber pipe according to claim 1, wherein each pawl (112) is rotatably supported by a supporting shaft (113) extending in a direction transverse to the axis of the mandrel (2), and wherein in order to receive the bent rubber pipe in the gripping member, the face circle is expandable at least as much as the outer diameter of the bent rubber pipe (1), by rotation of each pawl (112) in a retraction direction so that the tooth portion (116) thereof can pass over the periphery of the bent rubber pipe.

3. A device for use in manufacturing a bent rubber pipe according to claim 2, wherein each pawl (116) is rotatable by means of a spring (117) in a biting direction of the tooth portion.

4. A device for use in manufacturing a bent rubber pipe according to any of claims 1 to 3, wherein an aligning guide (125) is arranged at the mandrel side of the gripping member (10), and wherein the aligning guide (125) is provided with a guide bore (126) which is concentric with the face circle and which is capable of receiving the bent rubber pipe (1) therethrough, and a guide surface (127) inclined to the extracting direction toward the guide bore.

## Patentansprüche

1. Vorrichtung zur Verwendung bei der Herstellung eines gebogenen Gummirohres bzw. -schlauches (1), **dadurch gekennzeichnet, dass** ein Greifelement (10) vorgesehen ist, um in freier Weise auf einem Fortsatz einer Achse des gebogenen Gummirohres (1) sich vorwärts und rückwärts zu bewegen, um einen Endabschnitt des Rohres, der auf einen Dorn (2) aufgebracht ist, zu greifen, dass das Greifelement (10) mit einer Anzahl bewegbarer Klinken bzw. Sperrklinken (112) zum Greifen des gebogenen Gummirohres in gleichmäßigen Abständen bzw. Positionen um den Umfang ausgebildet ist, wobei jede Klinke bezüglich des Rohres mittels einer Feder (117) radial nach innen vorbelastet ist, dass jede Klinke mit einem sägezahnartigen Abschnitt (116) ausgebildet ist, welcher in der Lage ist, mit dem gebogenen Gummirohr (1) in Kontakt zu treten, wobei dessen Zähne in einer Herausziehrichtung geneigt sind, dass der Durchmesser eines Stirnkreises, welcher durch Verbindung der umfänglich benachbarten Zahnabschnitte der Klinken gebildet ist, kleiner als ein Außendurchmesser des gebogenen Gummirohres ist, und dass das Greifelement (10) angeordnet ist, um das gebogene Gummirohr (1) aufzunehmen und eine Beißwirkung zu entfalten, bei welcher die Zahnabschnitte (116) in den Umfang des gebogenen Gummirohres (1) in einem das Gummirohr greifenden Zustand beißen, wobei die Zahnabschnitte (116) der Klinken (112) gegen die Kraft der Feder (117) durch das gebogene Gummirohr (1) radial nach außen gedrängt werden, wenn das Greifelement (10) sich zu seiner Greifposition hinbewegt bzw. vorwärtsbewegt, wobei die Klinken (112) dann durch die Federn (117) in eine Greifposition gedrängt werden, in welcher das Ende des gebogenen Gummirohres durch die Klinken (112) ergriffen ist.

2. Vorrichtung zur Herstellung eines gebogenen Gummirohres nach Anspruch 1, bei welcher jede Klinke drehbar mittels einer Halterungswelle (113), welche sich in einer Richtung quer zur Achse des Dorns (2) erstreckt, gehaltert ist, und bei welcher zur Aufnahme des gebogenen Gummirohres in dem Greifelement der Stirnkreis wenigstens so viel wie der äußere Durchmesser des gebogenen Gummirohres (1) erweiterbar ist durch Drehung jeder Klinke (112) in einer Zurückzieh- bzw. Rückwärtsrichtung, so dass der Zahnabschnitt (116) sich über den Umfang des gebogenen Gummirohres bewegen bzw. diesen passieren kann.

3. Vorrichtung zur Verwendung bei der Herstellung eines gebogenen Gummirohres nach Anspruch 2, bei welcher jede Klinke (116) mittels einer Feder (117) in einer Beißrichtung des Zahnabschnitts drehbar ist.

4. Vorrichtung zur Verwendung bei der Herstellung eines gebogenen Gummirohres nach einem der Ansprüche 1 bis 3, bei welcher eine Ausrichtungsführung (125) an der Dornseite des Greifelements (10) angeordnet ist, und bei welcher die Ausrichtungsführung (125) mit einer Führungsbohrung (126), welche konzentrisch mit dem Stirnkreis ist und in der Lage ist, das gebogene Gummirohr (1) durch sich hindurch aufzunehmen, und einer Führungsfläche (127), welche in der Herausziehrichtung in Richtung der Führungsbohrung geneigt ist, ausgebildet ist.

## Revendications

1. Dispositif pour fabriquer un tuyau coudé en caoutchouc (1), **caractérisé en ce qu'**un élément de préhension (10) est prévu pour avancer et se rétracter librement sur un prolongement d'un axe du tuyau coudé en caoutchouc (1) afin de saisir une extrémité de celui-ci monté sur un mandrin (2), **en ce que** l'élément de préhension (10) est muni d'une pluralité de cliquets déplaçables (112) pour saisir le tuyau coudé en caoutchouc à des emplacements équidistants sur sa périphérie, chaque cliquet étant sollicité radialement par un ressort (117) vers l'intérieur par rapport au tuyau, **en ce que** chaque cliquet est formé avec une partie dentée (116) similaire à des dents de scie, qui est capable de venir en contact avec le tuyau coudé en caoutchouc (1) et dont les dents sont inclinées vers une direction d'extraction, **en ce qu'**un diamètre d'un cercle de face formé en reliant les parties dentées circonférentiellement adjacentes des cliquets est plus petit qu'un diamètre extérieur du tuyau coudé en caoutchouc, et **en ce que** l'élément de préhension (10) est agencé pour recevoir le tuyau coudé en caoutchouc (1) et pour exercer une action de morsure, dans laquelle les parties dentées (116) mordent dans la périphérie du tuyau coudé en caoutchouc (1) dans une condition où elles saisissent ce dernier, les parties dentées (116) des cliquets (112) étant forcées radialement vers l'extérieur contre la force du ressort (117) par le tuyau coudé en caoutchouc (1) lorsque l'élément de préhension (10) avance jusqu'à sa position de préhension, les cliquets (112) étant alors sollicités par les ressorts (117) dans une position de préhension dans laquelle l'extrémité du tuyau coudé en caoutchouc (1) est saisie par les cliquets (112).

2. Dispositif pour fabriquer un tuyau coudé en caoutchouc selon la revendication 1, **caractérisé en ce que** chaque cliquet (112) est rotativement supporté par un arbre de support (113) s'étendant dans une direction transversale à l'axe du mandrin (2), et **en ce que** pour recevoir le tuyau coudé en caoutchouc dans l'élément de préhension, le cercle de face est expansible au moins autant que le diamètre extérieur du tuyau coudé en caoutchouc (1), par rotation de chaque cliquet (112) dans une direction de rétraction de sorte que la partie dentée (116) de celui-ci peut passer au-dessus de la périphérie du tuyau coudé en caoutchouc.

3. Dispositif pour fabriquer un tuyau coudé en caoutchouc selon la revendication 2, **caractérisé en ce que** chaque cliquet (112) peut être mis en rotation au moyen d'un ressort (117) dans une direction de morsure de la partie dentée.

4. Dispositif pour fabriquer un tuyau coudé en caoutchouc selon l'une des revendications 1 à 3, **caractérisé en ce qu'**un guide d'alignement (125) est disposé près du mandrin (2) du côté de l'élément de préhension (10), et **en ce que** le guide d'alignement (125) est pourvu d'un alésage de guidage (126) concentrique avec le cercle de face et qui est adapté pour pouvoir être traversé par le tuyau coudé en caoutchouc (1), et d'une surface de guidage (127) inclinée sur la direction d'extraction vers l'alésage de guidage.
